# EUROPEAN PATENT APPLICATION

(11) **EP 1 464 761 A2**
(43) Date of publication of application: **06.10.2004**
(21) Application number: 04425164.3
(22) Date of filing: 11.03.2004
(51) Int. Cl.: E02B 11/00, B29C 53/56

(54) **A wrapped drainage pipe and the method and machine for its manufacture**

(30) Priority: 04.04.2003 IT AR20030017
(71) Applicant: RICCINI S.r.l., 06077 Perugia (IT)
(72) Inventor: Riccini, Mario, 06077 Perugia (IT)
(74) Representative: Berneschi, Ciro

(57) **Abstract**

A drainage pipe (1) wrapped in a strip (4) of non vegetable filtering material whose width is adequate to allow its side edges (5) and (6) in one case to overlap and be glued or soldered together, in another case to be glued to the pipe (1) along two lines (7) and (8).

The invention also comprises the method through which, immediately following the machine which manufactures the drainage pipe (1), the strip (4) of filtering material of indefinite length is first placed with a first side edge (5) over the first trace of glue poured along a first line (7) of the said pipe (1), it is then wrapped around the same pipe and a second trace of glue is poured, in one case over the first edge (5), in another case along a second line (8).

Finally, the filtering strip (4) is completely wrapped around by bringing the second edge (6) over the second trace of glue to achieve their joining.

## Description

The invention relates to a wrapped drainage pipe and the method and machine for its manufacture, with the said wrapped pipe ready for being placed in a ditch, therefore covered with sand, gravel and finally soil for it to drain the part of water soaked land where it has been placed.

There are known drainage pipes, normally corrugated ones, used to drain land which needs to be dried out. These pipes are equipped with holes distributed evenly along their length. Through these holes the water can penetrate inside them and therefore flow towards bigger collecting pipes from which the drained water is discharged into the emissary. In order to prevent or hinder the penetration of soil into the drainage pipes and limit the danger of their clogging, therefore ending their function, they are wrapped in a layer of permeable fibres, usually made of coconut fibres or other natural vegetable products.

A similar combination means the need of considerable manual work to wrap the layer of vegetable fibres around the drainage pipe, which is then fixed with one or more threads. This work is carried out on some sections of the pipe and usually by the ditch, therefore just before laying it into place.

Said protection, through which the soil cannot penetrate the drainage pipe, is effective only for a limited time because the dampness of the soil together with the ventilation produced by the drainage pipe produce mould on the layer of fibres until it rots, therefore until it is destroyed. As a consequence the fibres penetrate the pipe and can determine its clogging and making it useless in very few years.

The inconveniences of this process, due to the elaborate work needed to fix the layer of fibre onto the drainage pipe, to the high cost of the layer of fibres and also to the limited duration in time of said protection which filters the water absorbed by the drainage pipe have, on the whole, induced producers to follow a different process in manufacturing the filtering layer which wraps the drainage pipe.

This different process consists in utilising a tubular structure or sock made of non vegetable permeable material in which the drainage pipe is inserted and moves freely.

Said different solution on one side eliminates the step of tying the fibre and ensures the filtering layer wrapping the draining pipe to have a long duration, but on the other side there are other disadvantages and in particular those due to the seam on the same sock, and the ones created by the bulging rib originated by the said seam.

Another disadvantage is due to the joining of the filtering sock and the drainage pipe which is carried out by the ditch, therefore having to carry around two separate materials which are normally assembled by inadequate personnel and also in an outdoor environment where the filtering sock might be damaged when handled.

In fact, the thread used to sew the strip of filtering material produces holes, in the seaming points, which in some cases may widen due to the tensions the sock may undergo when the wrapped drainage pipe is handled. Therefore, the holes may become a possible access for the soil dragged in by the drained water.

Another disadvantage of the said method is due to the longitudinal rib formed along the seam of the filtering sock. The bulging rib can undergo tensions both when the wrapped pipe is handled and laid in the ditch. These tensions can produce rips along the strip of filtering material due to its delicate structure and the consequent problems can be easily imagined.

One more disadvantage of said method derives from the fact that the drainage pipe and the filtering sock move freely and independently, consequently when the wrapped drainage pipe is handled said sock can be stretched in some points therefore reducing the filtering action in those areas.

The aim of the present invention is to produce a pipe for the drainage of wet soils which is wrapped in a filtering strip when it is manufactured so as to not require a further joining operation immediately before its installation.

Another aim is to realise a drainage pipe wrapped in a filtering strip which is applied around the said pipe excluding at least the ends where the drainage pipe will interact with a hose-couplings and other fittings or means which do not require the presence of the wrapped filtering strip.

Another aim is to produce a wrapped drainage pipe - in which the drainage pipe is solid for the filtering strip which is wrapped around it so that said filtering strip is uniformly distributed - which is almost smooth on the external surface, therefore free from any rib where anomalous stresses could take place and cause the delicate wrapping material to be ripped.

One more aim is to produce a drainage pipe wrapped in a seamless strip and in any case without holes which, when the said pipe is handled, could dilate and eventually allow the soil and other small particles to penetrate the drainage pipe to the point of obstructing it or reducing its efficiency.

One more aim is a process and the machine to realise a wrapped drainage pipe through modes and stages of a production line, i.e. with the wrapping carried out in the same factory and immediately following the machine which manufactures the pipe itself, with work stages that allow the manufacturing of the drainage pipe and filtering strip combination without the need of an operator, in order to allow a high output of wrapped drainage pipes at a low cost.

The invention that has obtained said results consists of a drainage pipe, usually corrugated, wrapped in a strip of filtering non vegetable material and usually of nonwoven fabric. The width of the strip allows the two side edges, in one case, to overlap sufficiently so they can be joined by gluing or soldering, in another case to be glued to the drainage pipe along two lines, so only the surface of the pipe where drainage holes are distributed if they are not all around the said drainage pipe, is wrapped in a longitudinal direction. It also consists in the method and in the machine with which, immediately following the machine which produces the drainage pipe, the strip of filtering material of specific width, as above indicated, and of indefinite length is placed on the pipe. A first longitudinal edge of said strip is placed on a first trace of glue poured along a line of the said drainage pipe. In order for both edges to be joined as they are moved along, the strip is bent on the drainage pipe, for example with the aid of a bending and wrapping device, in order to bring the second longitudinal edge over the second trace of glue. In one case said second trace of glue is poured over the first edge of the filtering strip, so the two edges are glued together, in a second case it is poured over a second line of the drainage pipe when said drainage pipe needs to be wrapped only on one cylindrical section. In a different solution the second edge of the filtering strip is placed over the first edge glued on the drainage pipe to allow the two edges to be soldered together. The supplied filtering strip will be cut at fixed intervals and its forward movement will be stopped temporarily for realising a wrapped drainage pipe with interruptions in specific lenghts, normally where the cut is carried out, to transform the drainage pipe into a succession of sections.

A similar invention is particularly advantageous in that:
- the drainage pipe wrapped in the filtering layer is produced by the same company which produces the drainage pipe and in the same production line of the machine which produces it, without requiring further joining operations which would probably take place in a frequently inadequate environment;
- the drainage pipe wrapped in a filtering layer has sections which are not wrapped in the filtering layer, at least on its ends, therefore it does not require cleaning of the sections where coupling, connection points or other is required;
- the drainage pipe wrapped in the filtering layer does not have ribs or other protruding parts which could be subject to tensions or stresses when handled and therefore cause ripping;
- the filtering layer is seamless and devoid of holes through which water could drag inside the drainage pipe soil or other thin products which could clog it;
- the filtering layer is made of fibres and other products which do not produce mould and short term alterations, therefore ensuring a longer life product;
- the filtering layer concerns the entire surface of the drainage pipe when the drainage holes are placed along its entire outline; it can however concern only a longitudinal strip along the pipe when the drainage holes are only present in one cylindrical section of the pipe, just like for the drainage of putrid waters.

Other advantages will be evident, specially to skilled person in this field, by reading the description which follows referred to the preferred embodiments which are shown in the schematic drawings reproduced in the enclosed tables, in which:
- fig. 1 exemplifies a portion of a corrugated pipe cut along its axial plane, with distributed holes through which, when the pipe is placed in the ditch, the water from the soaked soil will seep inside it;
- fig. 2 exemplifies, in a different scale, a section of a drainage pipe completely wrapped all around in a permeable strip excluding a lenght at each end;
- fig. 3 exemplifies the placing of the permeable strip on the drainage pipe, during the production process in which the sections of the drainage pipe, of the type shown in figure 2, are manufactured;
- fig. 4 is the axial front view of the drainage pipe, on a different scale, combined with the strip of filtering material which is wrapped along its entire surface;
- fig. 5 is the axial front view of the drainage pipe with the holes placed only along one portion of its surface wrapped in the filtering strip;
- fig. 6 is the block diagram which exemplifies the method for manufacturing the wrapped drainage pipe;
- fig. 7 exemplifies, in a schematic form, the machine which operates the combination of the drainage pipe and the filtering strip as well as which operates the cutting of the wrapped drainage pipe into sections, as that shown in fig. 2.
   It is understood that the drawings are exemplifying and schematic with the sole aim of facilitating the comprehension of the invention without in any way constituting a limitation for it.
   In substance the invention concerns a wrapped drainage pipe consisting in a drainage pipe 1, normally of a corrugated type, supplied with drainage holes 2, distributed along its length, combined with a layer of filtering material made with a strip 4 of non vegetable material, normally synthetic, or in any case a material that will not deteriorate because of humidity and air. Said combination being manufactured by wrapping the pipe 1 with the filtering strip 4 extended in longitudinal direction, in one case by completely wrapping the pipe, with the side edges 5 and 6 of said filtering strip 4 overlapped and fixed between them by gluing or soldering, in another case by wrapping only the portion of surface of the drainage pipe 1 where the drainage holes 2 are distributed, with the side edges 5 and 6 not overlapped between them and both fixed to the drainage pipe 1 along two distinct lines 7 and 8 placed to the sides of the drainage pipe portion where the drainage holes are present.
   In particular, in the preferred embodiment, the combination of drainage pipe 1 with the filtering strip 4 is obtained by fixing a first side edge 5 of the completely wrapped all around in a permeable strip excluding a lenght at each end;

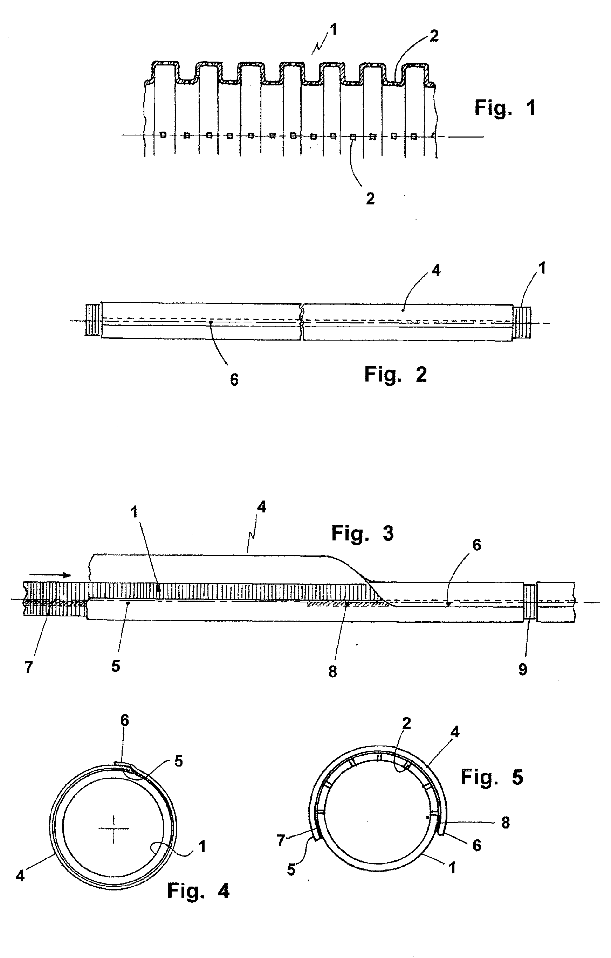

- fig. 3 exemplifies the placing of the permeable strip on the drainage pipe, during the production process in which the sections of the drainage pipe, of the type shown in figure 2, are manufactured;
- fig. 4 is the axial front view of the drainage pipe, on a different scale, combined with the strip of filtering material which is wrapped along its entire surface;
- fig. 5 is the axial front view of the drainage pipe with the holes placed only along one portion of its surface wrapped in the filtering strip;

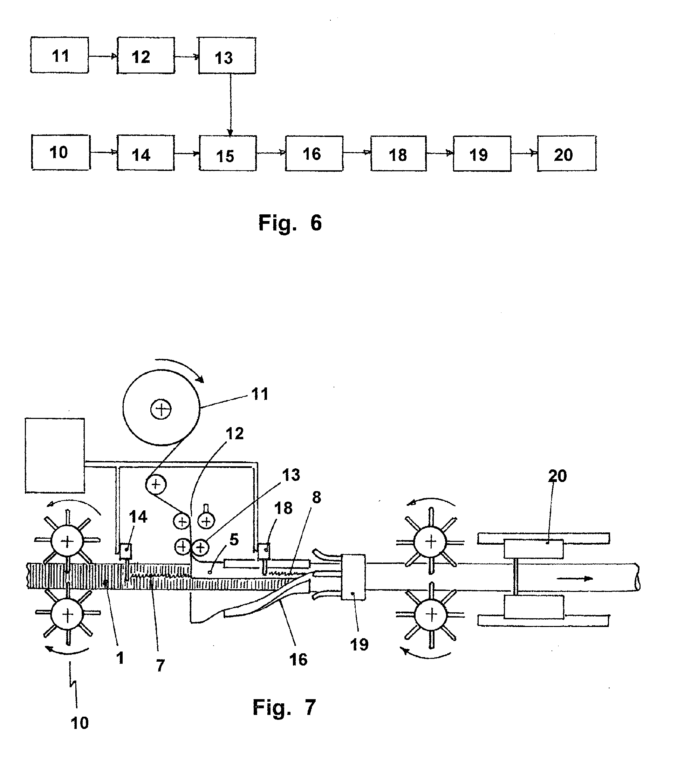

- fig. 6 is the block diagram which exemplifies the method for manufacturing the wrapped drainage pipe;
- fig. 7 exemplifies, in a schematic form, the machine which operates the combination of the drainage pipe and the filtering strip as well as which operates the cutting of the wrapped drainage pipe into sections, as that shown in fig. 2.

It is understood that the drawings are exemplifying and schematic with the sole aim of facilitating the comprehension of the invention without in any way constituting a limitation for it.

In substance the invention concerns a wrapped drainage pipe consisting in a drainage pipe 1, normally of a corrugated type, supplied with drainage holes 2, distributed along its length, combined with a layer of filtering material made with a strip 4 of non vegetable material, normally synthetic, or in any case a material that will not deteriorate because of humidity and air. Said combination being manufactured by wrapping the pipe 1 with the filtering strip 4 extended in longitudinal direction, in one case by completely wrapping the pipe, with the side edges 5 and 6 of said filtering strip 4 overlapped and fixed between them by gluing or soldering, in another case by wrapping only the portion of surface of the drainage pipe 1 where the drainage holes 2 are distributed, with the side edges 5 and 6 not overlapped between them and both fixed to the drainage pipe 1 along two distinct lines 7 and 8 placed to the sides of the drainage pipe portion where the drainage holes are present.

In particular, in the preferred embodiment, the combination of drainage pipe 1 with the filtering strip 4 is obtained by fixing a first side edge 5 of the filtering strip 4 to a line 7 of drainage pipe 1, with the aid of glue; then, said filtering strip 4 is bent over the same drainage pipe 1 till it wraps around it length wise and its second side edge 6 is brought to overlap, in one case, the first side edge 5, along which second edge of said filtering strip it will be fixed, in a second case, the second line 8, on which it will be glued, without reaching the first side edge 5.

Said sheathing normally covers the whole length of the single tubular drainage pipe sections. Each one can be various meters long and on average they have a length of 50 meters. A part with variable length of 5 to 20 cms at each end of the pipe section is excluded from sheathing, so as to allow the application of the hose-couplings and/or connecting joints without the need of cutting and eliminating said parts of sheathing on site, where the facilities are not usually appropriate for the accomplishment of precise and accurate work.

The strip of filtering material 4 which covers drainage pipe 1 is made of material resistant to humidity and air, so that when the wrapped drainage pipe section is installed, said strip 4 will not rot in a short time, as often happens now with filtering material made of vegetable fibres. The invention foresees the use of a strip 4 made of synthetic fibres, usually a nonwoven fabric. Therefore said strip, in the preferred embodiment, is fixed along its first side edge 5, by means of glue, and in particular by means of a hot glue, along a line 7 of drainage pipe 1.

The use of hot glue helps the fast and stable connection of the joined elements. Therefore, the filtering strip 4 is bent so as to wrap around the drainage pipe 1 until its second side edge 6 is brought, in one case to overlap the first side edge 5 to which it will be fixed, in another case till the second side edge 6 is made to reach a distinct line 8 to which it will be glued. Line 8 is placed so as to wrap the whole cylindrical section of the pipe 1 along which the drainage holes 2 are distributed. The joints are carried out with glue, and in particular with hot glue, which guarantees a quicker adhesion.

In another embodiment, by using filtering strip 4 also made with fibres having a low melting temperature, the connection of overlapping side edges 5 and 6 is carried out by means of a heating process and therefore the soldering of the fibres which are present along the overlapping edges 5 and 6.

The width of filtering strip 4 is such that in one case it wraps around pipe 1 and allows its side edges 5 and 6 to overlap, so as to guarantee their joining by means of gluing or soldering, in another case it has a width to cover, with an appropriate margin, the whole cylindrical section along which the drainage holes are placed. From the experimental results in the first case it is sufficient to carry out an overlap of the two side edges 5 and 6 of the filtering strip 4 and perform along the overlapped section a continuous joint with a width of 0,2 to 6 cms, to ensure the perfect adhesion of the strip to the drainage pipe 1 wrapped by it and the joining of the two said edges. In the second case, in which drainage holes 2 are placed along only one cylindrical section of drainage pipe 1, it is sufficient for filtering strip 4 to have a width equal to the width of said section plus two side gluing edges, each one of at least two cms.

The method by which the combination between the filtering strip 4 and the drainage pipe 1 is carried out, foresees a stages sequence and in any case "the covering of the drainage pipe 1 in line" that is by means of the machine that carries out said combination placed immediately after the machine which manufactures continuously the pipe 1 with drainage holes 2 placed along it.

Said method, in the preferred embodiment, foresees:
- a stage in which a first trace of glue is laid along a line 7 on the advancing drainage pipe 1;
- a stage in which the filtering strip 4 is placed with its first side edge 5 on said first trace of glue, along the line 7 on the drainage pipe 1, to carry out their joining;
- a stage in which a second trace of glue is laid out, in one case over said first edge 5, in another case along a second line 8 of drainage pipe 1, said second line 8 placed beyond the portion equipped with drainage holes 2;
- a stage in which the filtering strip 4 is bent around the drainage pipe 1, till its second side edge 6 is brought to overlap in one case the first edge 5, in the second case the second line 8, to be joined along edge 5, or onto the said drainage pipe 1.

In an alternative solution, in which the second trace of glue should not be laid and the width of strip 4 is such as to allow its edges 5 and 6 to be overlapped, the method foresees:
- a stage in which strip 4 is bent around drainage pipe 1 until its second side edge 6 is brought to overlap the first side edge 5;
- a stage in which the two overlapped edges 5 and 6 are heated and pressed one against the other to obtain their soldering together.

Said method also comprises a stage in which the filtering strip 4 is cut and its forward movement is temporarily interrupted, before reaching the drainage pipe 1 which needs to be wrapped, so that drainage pipe 1 and the filtering strip 4 move reciprocally to produce an interruption 9 of the wrapping operation of drainage pipe 1. Said pipe will then result wrapped in sections, therefore each wrapped section is distanced from the following wrapped section, as exemplified in fig. 3.

Therefore, while drainage pipe 1 moves along consistently, the filtering strip 4 remains still at each cutting phase, so as to realise on drainage pipe 1 a succession of wrapped sections distanced from each other, to allow drainage pipe 1 wrapped with strip 4 to be cut on those interruptions 9 and therefore originate a succession of wrapped drainage tubular sections, with at least at each end an unwrapped lenght.

The machine which can carry out this method, in the case in which the side edges 5 and 6 of filtering strip 4 are overlapped and joined by gluing, or glued to drainage pipe 1 along two different lines 7 and 8, foresees: a guiding and moving forward system 10 for drainage pipe 1; at least one feeding and placing group 11 of filtering strip 4; means 12 to cut said filtering strip 4 transversally in respect to its forward moving motion; means 13 for its guiding and positioning over drainage pipe 1 which needs to be wrapped; means 14 for the laying of the first trace of glue along a line 7 of said drainage pipe 1; means 15 which lay down and press down the first edge 5 of filtering strip 4 over the first trace of glue; means 16 for the bending of filtering strip 4 around drainage pipe 1 to wrap it; means 18 for the laying of the second trace of glue, in one case over the first edge 5, in another case along a second line 8 of drainage pipe 1, said second line 8 placed beyond the surface with drainage holes 2. Said machine also foresees means 19 with which the bending of filtering strip 4 over drainage pipe 1 is completed and the pressing action is also carried out, as needed, of the second side edge 6 in one case over the first side edge 5, where the second trace of glue has been laid, in another case over the trace of glue on the second line 8 of drainage pipe 1.

Finally, said machine foresees means 20 which, in one case grab drainage pipe 1, wrapped in filtering strip 4 and, while they follow along in the forward movement, they operate its cutting to produce a succession of wrapped tubular sections, therefore they return to position to operate the next hold on the forward moving wrapped drainage pipe to operate the cutting of the following section.

In another case, when drainage pipe 1 is flexible, said means grab and hold the wrapped pipe while it is being cut to then release it and let it run along.

In the case in which the joining of side edges 5 and 6 is carried out by soldering them, after the edges are overlapped, they are kept together and heated at a temperature appropriate for the fibres of filtering strip 4 to melt and join together.

When manufacturing, the details can be modified, as long as the logic behind the invention, as defined in the following claims, is maintained.

## Claims

1. A wrapped drainage pipe, comprising a drainage pipe (1) supplied with drainage holes (2) distributed along its length and a layer of filtering material which is wrapped around it, **characterised by** the fact that the filtering strip (4) that wraps the drainage pipe (1) is made of non vegetable material, by the fact that said filtering strip (4) is bent over the drainage pipe (1) and extended in longitudinal direction, and by the fact that in one case the filtering strip (4) completely wraps the drainage pipe (1), with its side edges (5) and (6) overlapped and fixed between them by gluing or soldering, in another case the filtering strip (4) wraps only the portion of the surface of the drainage pipe (1) where the drainage holes (2) are distributed, with its side edges (5) and (6) not overlapped beetwen them and both fixed to the drainage pipe (1) along two distinct lines (7) and (8).

2. The wrapped drainage pipe, as claimed in claim 1, **characterised by** the fact that the drainage pipe (1) with drainage holes (2) is wrapped in a strip (4) of filtering material, excluding at least a lenght at each of its ends.

3. The wrapped drainage pipe, as claimed in claim 1, **characterised by** the fact that the strip (4) is made of synthetic material of a nonwoven type fabric.

4. The wrapped drainage pipe, as claimed in claim 1, **characterised by** the fact that at least the first side edge (5) of the filtering strip (4) is fixed along a line onto the drainage pipe (1) by means of glue.

5. The wrapped drainage pipe, as claimed in claim 1, **characterised by** the fact that the first side edge (5) of the filtering strip (4) is fixed along a line onto the drainage pipe (1) by means of hot glue.

6. The wrapped drainage pipe, as claimed in claim 1, **characterised by** the fact that the second side edge (6) of the filtering strip (4) is overlapped onto the first edge (5) and fixed on it with glue.

7. The wrapped drainage pipe, as claimed in claim 1, **characterised by** the fact that the second side edge (6) of the filtering strip (4) is overlapped onto the first edge (5) and fixed on it with hot glue.

8. The wrapped drainage pipe, as claimed in claim 1, **characterised by** the fact that the second side edge (6) of the filtering strip (4) is overlapped onto the first edge (5) and fixed on it by soldering.

9. The wrapped drainage pipe, as claimed in claim 1, **characterised by** the fact that the second side edge (6) of the filtering strip (4) is overlapped onto the first edge (5) without interruptions, for a width normally between 0,2 and 6 cm.

10. The wrapped drainage pipe, as claimed in claim 1, **characterised by** the fact that the filtering strip (4) wraps a cylindrical section of the drainage pipe
(1) on which the drainage holes (2) are placed and the side edges (5) and (6) of said strip are fixed to the said pipe by means of glue along two distinct lines (7) and (8).

11. The method through which to realise the wrapped drainage pipe of claim 1, **characterised by**:
- a stage in which at least a first trace of glue is laid along a line (7) on the forward moving drainage pipe (1) to be wrapped;
- a stage in which the filtering strip (4) is placed with its first side edge (5) over the first trace of glue on the drainage pipe (1) to carry out their joining;
- a stage in which a second trace of glue is laid, in one case over the said first side edge (5), in a second case, along a second line (8) of the drainage pipe (1);
- a stage in which the filtering strip (4) is bent around the drainage pipe (1) to bring its second side edge (6), in one case, to overlap and join onto the first side edge (5), in another case to overlap onto the second trace of glue along line (8);
otherwise, in absence of a second laying of glue:
- a stage in which the filtering strip (4) is bent around the drainage pipe (1) to bring its second side edge (6) to overlap onto the first side edge (5);
- a stage in which the two overlapped edges (5) and (6) are heated and pressed one against the other to obtain their soldering.

12. The method, as claimed in claim 11, **characterised by** a stage in which the filtering strip (4) is cut and its forward movement is temporarily interrupted so that the drainage pipe (1) and the said filtering strip (4) may run reciprocally to create a distance between one section of wrapped drainage pipe and the next.

13. The method, as claimed in claim 11, **characterised by** a stage in which the wrapped drainage pipe is cut in the parts where it is not combined with the filtering strip (4) to be transformed into sections.

14. A machine to manufacture the drainage pipe as claimed in claim 1, **characterised by** the fact that it includes at least the following:
- a group (10) to guide and move forward the drainage pipe (1) to be wrapped;
- at least one group (11) for the feeding and the placing of the filtering strip (4);
- means (12) to cut said filtering strip (4) transversally in respect to its forward moving motion;
- means (14) for the laying of the first trace of glue along a line (7) of said drainage pipe (1);
- means (15) which lay down and press down the first side edge (5) of filtering strip (4) over the first trace of glue;
- means (16) for the bending of filtering strip (4) around drainage pipe (1) to wrap it;
- means (18) for the laying of the second trace of glue, in one case over the first side edge (5), in another case along a second line (8) of drainage pipe (1);
- means (19) with which the bending of filtering strip (4) over drainage pipe (1) is completed and the pressing action is also carried out, as needed, on the second side edge (6), in one case over the first side edge (5), in another case over the second trace of glue on drainage pipe (1);
- means (20) which grab the forward moving wrapped pipe and, in one case they accompany it in its forward movement and cut it in correspondence of the lenghts where the drainage pipe (1) is not wrapped, in another case they hold it still and cut it in correspondence of those lenghts where the drainage pipe (1) is not wrapped, then letting it go for it to move along again.

15. The machine, as claimed in claim 14, **characterised by** the fact that it is ready to be placed on the same line as the machine which produces the drainage pipe (1) to be wrapped.
